(19) Europäisches Patentamt

European Patent Office

Office européen des brevets

(11) **EP 0 755 968 A2**

(12) **EUROPÄISCHE PATENTANMELDUNG**

(43) Veröffentlichungstag:
29.01.1997 Patentblatt 1997/05

(51) Int. Cl.$^6$: **C08J 9/14**
// C08L75/04

(21) Anmeldenummer: 96111409.7

(22) Anmeldetag: 16.07.1996

(84) Benannte Vertragsstaaten:
AT BE CH DE DK ES FR GB GR IT LI LU NL PT SE

(30) Priorität: 25.07.1995 DE 19526979

(71) Anmelder: BASF AKTIENGESELLSCHAFT
67056 Ludwigshafen (DE)

(72) Erfinder:
• Seifert, Holger, Dr.
01705 Freital (DE)
• Hempel, Renate
01987 Schwarzheide (DE)
• Knorr, Gottfried, Dr.
01987 Schwarzheide (DE)
• Rotermund, Udo, Dr.
01990 Ortrand (DE)

(54) **Verfahren zur Herstellung von Hartschaumstoffen auf Isocyanatbasis**

(57) Die Erfindung betrifft ein Verfahren zur Herstellung von Hartschaumstoffen auf Isocyanatbasis, bei dem als Treibmittel ein Gemisch aus mindestens einem niedrigsiedenden Kohlenwasserstoff mit 3 bis 7 Kohlenstoffatomen, niedermolekularen monofunktionellen, primäre oder sekundäre Hydroxylgruppen enthaltenden Alkoholen mit 1 bis 4 Kohlenstoffatomen und gegebenenfalls dem aus Wasser und Isocyanat entstehenden Kohlendioxid eingesetzt wird, eine Treibmittelmischung für die Herstellung von Hartschaumstoffen auf Isocyanatbasis sowie deren Verwendung als Isoliermaterial.

Printed by Rank Xerox (UK) Business Services
2.13.13/3.4

**Beschreibung**

Die Erfindung betrifft ein Verfahren zur Herstellung von Hartschaumstoffen auf Isocyanatbasis, bei dem als Treibmittel ein Gemisch aus mindestens einem niedrigsiedenden Kohlenwasserstoff mit 3 bis 7 Kohlenstoffatomen, niedermolekularen monofunktionellen, primäre oder sekundäre Hydroxylgruppen enthaltenden Alkoholen mit 1 bis 4 Kohlenstoffatomen und gegebenenfalls dem aus Wasser und Isocyanat entstehenden Kohlendioxid eingesetzt wird, die nach diesem Verfahren hergestellte Treibmittelmischung sowie deren Verwendung als Isoliermaterial.

Hartschaumstoffe auf Isocyanatbasis, insbesondere Polyurethan- und Isocyanuratschaumstoffe, sind seit langem bekannt und werden vorwiegend zur Wärme- oder Kälteisolation, z.B. in Kühlgeräten, im Bauwesen, in warmwasserspeichern und Fernwärmerohren, benutzt. Als Treibmittel zur Herstellung dieser Schaumstoffe setzte man bis in die jüngste Zeit Fluorchlorkohlenwasserstoffe (FCKW), vor allem das Trichlorfluormethan, ein. Diese FCKW müssen wegen ihrer zerstörenden Wirkung auf die globale Ozonschicht durch Stoffe substituiert werden, die kein diese Ozonschicht schädigendes Potential (Ozone Depletion Potential, ODP) und einen möglichst geringen Treibhauseffekt (Global Warming Potential, GWP) aufweisen. Außerdem ist zu erwarten, daß - zumindest in einigen Jahren - nur noch halogenfreie Treibmittel oder Treibmittelgemische eingesetzt werden sollen.

Aus diesen Gründen wurden Kohlenwasserstoffe als Treibmittel der Zukunft vorgeschlagen. Eine herausragende Rolle unter den Kohlenwasserstoffen nehmen die Isomere des Pentans ein, die wegen ihrer relativ niedrigen Siedepunkte recht gut als Treibmittel zur Herstellung von Hartschaumstoffen auf Isocyanatbasis geeignet sind.

Es hat sich gezeigt, daß das Cyclopentan gegenüber n- und iso-Pentan Schaumstoffe niedrigerer Wärmeleitfähigkeit ergibt (EP-A-0 421 269) und damit das Cyclopentan oder dessen Gemische mit Stoffen, die unter 35°C sieden, die bisher besten halogenfreien Treibmittelvarianten darstellen. Auch das Cyclohexan wird in EP-A-0 421 269 als Treibmittel analog zum Cyclopentan vorgeschlagen.

Das Cyclopentan hat sich in den letzten 2 Jahren in der europäischen Kühlmöbelindustrie bereits durchgesetzt. Aus Kostengründen und wegen der etwas stärkeren Treibwirkung setzt man jedoch auch n-Pentan oder iso-Pentan und andere niedrigsiedende Kohlenwasserstoffe als Treibmittel ein, obwohl diese schlechtere Wärmeleitfähigkeitswerte als Cyclopentan ergeben.

Obwohl bei Verwendung dieser Kohlenwasserstoffe, einschließlich des Cyclopentans, zu Isolationszwecken sehr gut brauchbare Schaumstoffe erhalten werden, weisen diese gegenüber den FCKW getriebenen Produkten noch Nachteile, insbesondere hinsichtlich der Fließeigenschaften des aufschäumenden Gemisches auf.

Der Einsatz von polaren niedriger und auch höher siedenden Verbindungen im Gemisch mit Cyclopentan, wie z.B. Ameisensäure- oder Essigsäureestern, niedrigsiedenden Ketonen oder Ethern, wie er in US-A-5 336 696 beschrieben wird, führt zwar zu einer etwas verbesserten Fließfähigkeit und Treibwirkung, ergibt aber durch die stark weichmachenden Eigenschaften der in der Erfindung beanspruchten Stoffe auf das Hartschaumstoffgerüst aus Isocyanataddukten katastrophale Schrumpferscheinungen, vor allem bei Schaumstoffen im technisch bedeutsamen Dichtebereich unter 50 kg/m$^3$.

Monofunktionelle Alkohole sind in Kombination mit halogenfreien Kohlenwasserstoffen bisher noch nicht als Hilfsmittel zur Verbesserung der Treibwirkung und des Fließverhaltens bei der Herstellung von Hartschaumstoffen auf Isocyanatbasis verwendet worden.

Von den monofunktionellen Alkoholen wird das Methanol lediglich als Bestandteil spezieller Katalysatoren zur Herstellung von hochtemperaturbeständigen Carbodiimid-Schaumstoffen (DT-A-253 029, US-A-3 887 501, US-A-4 029 611, EP-A-2281, US-A-3 922 238) oder Polyamidschaumstoff (US-A-3 620 987) aus Isocyanaten eingesetzt.

Es ist auch bekannt, niedermolekulare Alkohole in das Isocyanat einzubringen, wobei eine Prepolymerbildung durch Reaktion zum Urethan erfolgt (z. B. DE-A-43 41 973). Dadurch wird eine bessere Verträglichkeit der Polyol- mit der Isocyanatkomponente erreicht. Da der Alkohol bei dieser Verfahrensweise bereits vor der Schäumreaktion quantitativ chemisch an das Isocyanat in Form von Urethan gebunden ist, ist keinerlei Treibwirkung mehr zu erwarten.

In GB-A-2 271 996 wird die Kombination von Dibutylphthalat und Ethanol im Molverhältnis 1:1,5 bis 1:4 als Treibmittel für die Herstellung eines Schaumstoffes aus Abfällen der Papierindustrie mit Isocyanaten beschrieben. Auf Qualitätsparameter wird nicht eingegangen. In Hartschaumstoffen auf Isocyanatbasis normaler Qualität macht sich bekanntlich die Anwesenheit auch nur geringer Mengen an Weichmacher durch starke, nicht akzeptable Schrumpferscheinungen bemerkbar. Ein derartiges Gemisch ist damit unbrauchbar als Treibmittel für normale Hartschaumstoffe auf Isocyanatbasis.

In EP-A-0 463 479 wird der Einsatz von tertiären Alkoholen, insbesondere von tertiärem Butanol, in Kombination mit Wasser als Treibmittel beschrieben. Das Ziel ist die Herstellung von harten Integralschaumstoffen mit einer verdichteten glatten, porenfreien Oberfläche in Abwesenheit von physikalisch wirkenden Treibmitteln. Das tertiäre Butanol reagiert hierbei mit den Isocyanatgruppen unter Abspaltung von Kohlendioxid zu Buten. Damit wirkt das tertiäre Butanol als chemisches Treibmittel. Hierbei unterscheiden sich die tertiären Alkohole von den anderen monofunktionellen Alkoholen, die neben ihrer physikalischen Treibwirkung mit ihren Hydroxylgruppen in das Schaumstoffgerüst eingebaut werden und die Eigenschaften mit beeinflussen können.

Beansprucht werden ferner verschiedene Gemische von HFCKW (mindestens ein Wasserstoff im Molekül der Chlor/Fluor/Kohlenstoff-Verbindung), Chlorkohlenwasserstoffen mit monofunktionellen niedermolekularen Alkoholen als Reinigungsmittel, für die auch der Einsatz als Treibmittel für Polyurethan-Hartschaumstoffe teilweise mit erwähnt wird (EP-A-0 379 268, US-A-5 039 442, WO 91/18966, WO 92/06800, DD 211 121). Von diesen Schriften beschreiben nur WO 92/06800 und DD 211 121 Beispiele zur Herstellung von Polyurethanhartschaum mit Alkohol-/Chlor-Fluor-Verbindungen im Gemisch als Treibmittel. In DD 211 121 wird zudem nur der gemeinsame Zusatz von Wasser und Alkohol im Molverhältnis größer 4 für Dichten über 160 kg/m$^3$ beansprucht. Die Alkoholkozentration in der aufschäumenden Gesamtmasse ist dabei stets kleiner als 0,5 %. Unter diesen Bedingungen wirkt der Alkohol neben dem Wasser nicht zusätzlich als treibend. Die Tatsache, daß die relativ hochsiedenden Alkohole gemäß WO 92/06800 überhaupt treibend wirken, wird auf spezielle Wechselwirkungen zwischen Alkohol und FCKW (Aceotropbildung) zurückgeführt. Diese halogenhaltigen Kohlenwasserstoffe sind jedoch, wie bereits weiter oben ausgeführt, zukünftig nicht als Treibmittel zulässig, auch nicht in Kombination mit Alkoholen.

Aus dem Einsatz der niedermolekularen Alkohole im Gemisch mit halogenhaltigen Treibmitteln ist in keiner Weise die Verwendung von Gemischen aus Alkoholen und halogenfreien Kohlenwasserstoffen herleitbar, da die physikalischchemische Struktur von halogenfreien Kohlenwasserstoffen sich von der der halogenhaltigen Kohlenstoffverbindungen beträchtlich unterscheidet. So betragen beispielsweise die Dipolmomente der C-F- und der C-Cl-Bindungen 1,5 bzw. 1,7 Debye, das Dipolmoment der C-H-Bindung jedoch nur 0,2 Debye (Rudolf Brdička, Grundlagen der Physikalischen Chemie, 4. Auflage, VEB Deutscher Verlag der Wissenschaften, Berlin 1963, Seite 855) und es sind demzufolge völlig andere Wechselwirkungen zwischen Alkoholen und halogenhaltigen Kohlenstoffverbindungen gegenüber Alkoholen und halogenfreien Kohlenwasserstoffen zu erwarten.

Der vorliegenden Erfindung lag deshalb die Aufgabe zugrunde, Hartschaumstoffe auf Isocyanatbasis herzustellen, wobei die bei Einsatz der oben beschriebenen Treibmittel bzw. Treibmittelmischungen auftretenden genannten Nachteile weitgehend vermieden, insbesondere die Treibwirkung und das Fließverhalten im aufschäumenden Reaktionsgemisch erheblich verbessert werden.

Diese Aufgabe konnte überraschenderweise dadurch gelöst werden, daß gemeinsam mit Cyclopentan und/oder anderen niedrigsiedenden Kohlenwasserstoffen niedermolekulare monofunktionelle, primäre oder sekundäre Hydroxylgruppen enthaltende Alkohole, gegebenenfalls in Verbindung mit Wasser, als Treibmittel eingesetzt werden.

Gegenstand der Erfindung ist demzufolge ein Verfahren zur Herstellung von Hartschaumstoffen auf Isocyanatbasis durch Umsetzung von

a) organischen und/oder modifizierten organischen Polyisocyanaten mit

b) mindestens einer höhermolekularen Verbindung mit mindestens zwei reaktiven Wasserstoffatomen und gegebenenfalls

c) niedermolekularen Kettenverlängerungs- und/oder Vernetzungsmitteln

in Gegenwart von

d) Treibmitteln,
e) Katalysatoren sowie gegebenenfalls
f) weiteren Hilfsmitteln und/oder Zusatzstoffen,

das dadurch gekennzeichnet ist, daß als Treibmittel ein Gemisch aus mindestens einem niedrigsiedenden Kohlenwasserstoff mit 3 bis 7 Kohlenstoffatomen und niedermolekularen monofunktionellen, primäre oder sekundäre Hydroxylgruppen enthaltenden Alkoholen mit 1 bis 4 Kohlenstoffatomen, gegebenenfalls in Verbindung mit dem aus Wasser und Isocyanat entstehenden Kohlendioxid, eingesetzt wird.

Gegenstände der Erfindung sind weiterhin eine Treibmittelmischung für die Herstellung von Hartschaumstoffen auf Isocyanatbasis sowie deren Verwendung als Isoliermaterial.

Durch den Einsatz von monofunktionellen Alkoholen in Kombination mit halogenfreien Kohlenwasserstoffen ergibt sich in überraschender Weise eine beträchtliche zusätzliche Treibwirkung, verbunden mit einem erheblich verbesserten Fließen des aufschäumenden Gemisches ohne die beschriebenen Nachteile bei der Anwendung erhöhter Mengen der Kohlenwasserstoffe, erhöhter Mengen Wasser oder niedrigsiedender Ester, Ketone und Ether. Nach der bisher vertretenen Auffassung beeinträchtigen monofunktionelle wasserstoffaktive Stoffe durch Störung der Vernetzungsreaktion sowohl die Verarbeitungseigenschaften, wie den Härtungsprozeß, als auch die Endeigenschaften der Hartschaumstoffe auf Isocyanatbasis. Es ist daher völlig überraschend, daß mit einfachen, ihrem Wesen nach geläufigen Rezepturadaptionen diese Nachteile nicht nur kompensiert werden, sondern in den meisten Fällen zu Eigenschaftsverbesserungen führen.

Das erfindungsgemäß einzusetzende Treibmittelgemisch enthält die niedrigsiedenden Kohlenwasserstoffe mit 3 bis 7 Kohlenstoffatomen vorzugsweise in einer Menge von 0,1 bis 12 Masse-%, besonders bevorzugt 4 bis 8 Masse-%, und die niedermolekularen monofunktionellen, primäre oder sekundäre Hydroxylgruppen enthaltenden Alkohole mit 1 bis 4 Kohlenstoffatomen, vorzugsweise in einer Menge von 0,1 bis 6 Masse-%, besonders bevorzugt 2 bis 4 Masse-%, jeweils bezogen auf die Gesamtmenge des Schaumstoffes.

Als niedrigsiedende Kohlenwasserstoffe mit 3 bis 7 Kohlenstoffatomen werden vorzugsweise Cyclopentan, n-Pentan und Isopentan verwendet. Diese Kohlenwasserstoffe können allein oder im Gemisch untereinander eingesetzt werden.

Als niedermolekulare monofunktionelle, primäre oder sekundäre Hydroxylgruppen enthaltende Alkohole mit 1 bis 4 Kohlenstoffatomen kommen insbesondere Methanol, Ethanol, n-Propanol, iso-Propanol und die Isomeren des Butanols, ausgenommen das tertiäre Butanol, in Betracht. Diese Alkohole können allein oder im Gemisch untereinander eingesetzt werden.

Die Herstellung der Hartschaumstoffe auf Isocyanatbasis erfolgt durch Umsetzung in an sich bekannter Weise von

a) organischen und/oder modifizierten organischen Polyisocyanaten mit

b) mindestens einer höhermolekularen Verbindung mit mindestens zwei reaktiven Wasserstoffatomen und gegebenenfalls

c) niedermolekularen Kettenverlängerungs- und/oder Vernetzungsmitteln

in Gegenwart

d) der erfindungsgemäßen Treibmittelmischung sowie von

e) Katalysatoren und gegebenenfalls

f) üblichen weiteren Hilfsmitteln und/oder Zusatzstoffen.

Zur Herstellung der Hartschaumstoffe auf Isocyanatbasis nach dem erfindungsgemäßen Verfahren finden, mit Ausnahme der Treibmittel (d), die an sich bekannten Aufbaukomponenten Verwendung, zu denen im eizelnen folgendes auszuführen ist.

a) Als organische Polyisocyanate kommen die an sich bekannten aliphatischen, cycloaliphatischen, araliphatischen und vorzugsweise aromatischen mehrwertigen Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylendiisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenylpolymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden.

Besonders bewährt haben sich Diphenylmethan-diisocyanat-Isomerengemische oder Roh-MDI mit einem Diphenylmethandiisocyanatisomerengehalt von 33 bis 55 Masse-% und urethangruppenhaltige Polyisocyanatgemische auf Basis von Diphenylmethandiisocyanat mit einem NCO-Gehalt von 15 bis 33 Masse-%.

b) Als Verbindungen mit mindestens zwei gegenüber Isocyanaten reaktiven Wasserstoffatomen kommen Verbindungen in Frage, die zwei oder mehrere reaktive Gruppen, ausgewählt aus OH-Gruppen, SH-Gruppen, NH-Gruppen $NH_2$-Gruppen und CH-aciden Gruppen, wie z.B. β-Diketo-Gruppen, im Molekül tragen.

Zweckmäßigerweise werden solche mit einer Funktionalität von 2 bis 8, vorzugsweise 2 bis 6, und einem Molekulargewicht von 300 bis 8000, vorzugsweise von 400 bis 4000 verwendet. Bewährt haben sich z.B. Polyetherpolyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Die Hydroxylzahl der Polyhydroxylverbindungen beträgt dabei in aller Regel 100 bis 850 und vorzugsweise 200 bis 600.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 35 bis 50 : 20 bis 32 Gew. -Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.

Zur Herstellung der Polyester-polyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 4, insbesondere 2 bis 3, und ein Molekulargewicht von 300 bis 3000, vorzugsweise 350 bis 2000 und insbesondere 400 bis 600.

Insbesondere als Polyole verwendet werden jedoch Polyetherpolyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.

Die Polyether-polyole, vorzugsweise Polyoxypropylen- und Polyoxypropylen-polyoxyethylen-polyole, besitzen eine Funktionalität von vorzugsweise 2 bis 6 und insbesondere 2 bis 4 und Molekulargewichte von 300 bis 8000, vorzugsweise 400 bis 1500 und insbesondere 420 bis 1100 und geeignete Polyoxytetramethylen-glykole ein Molekulargewicht bis ungefähr 3500.

Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyetherpolyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.

Die Polyether-polyole können ebenso wie die Polyester-polyole einzeln oder in Form von Mischungen verwendet werden. Ferner können sie mit den Pfropf-polyether-polyolen oder Polyesterpolyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).

c) Die Hartschaumstoffe auf Isocyanatbasis können ohne oder unter Mitverwendung von Kettenverlängerungungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur Herstellung der Hartschaumstoffe auf Isocyanatbasis Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Polyolverbindung (b) zum Einsatz.

d) Als Treibmittel (d) wird das weiter oben beschriebene erfindungsgemäße Treibmittelgemisch aus mindestens einem niedrigsiedenden Kohlenwasserstoff mit 3 bis 7 Kohlenstoffatomen und niedermolekularen monofunktionellen Alkoholen mit 1 bis 4 Kohlenstoffatomen eingesetzt. Es wird vorteilhafterweise in die aus den Aufbaukomponenten (b), (e) und gegebenenfalls (c) und (f) bestehende Polyolkomponente eingebracht. Es ist aber auch möglich, ein Gemisch aus den niedrigsiedenden Kohlenwasserstoffen und den niedermolekularen monofunktionellen Alkoholen in den Mischkopf einer Schäummaschine getrennt neben der Polyolkomponente zu dosieren. Ebenso kann man mit dieser Technik den niedermolekularen monofunktionellen Alkohol bzw. das Alkoholgemisch allein in den Mischkopf dosieren, während das restliche Treibmittel bereits in der Polyolkomponente gelöst ist, oder umgekehrt, die niedrigsiedenden Kohlenwasserstoffe getrennt von einem Gemisch aus Polyolkomponente und niedermolekularen monofunktionellen Alkoholen dem Mischkopf zuführen. Das erfindungsgemäße Treibmittelgemisch kann allein oder vorzugsweise in Verbindung mit Wasser verwendet werden.

e) Als Katalysatoren (e) zur Herstellung der Hartschaumstoffe auf Isocyanatbasis werden insbesondere Verbindungen verwendet, die die Reaktion der reaktive Wasserstoffatome, insbesondere Hydroxylgruppen, enthaltenden Verbindungen der Komponente (b) und gegebenenfalls (c) mit den organischen, gegebenenfalls modifizierten Polyisocyanaten (a) stark beschleunigen. Die Isocyanatgruppen können durch geeignete Katalysatoren (e) aber auch miteinander zur Reaktion gebracht werden, wobei neben den Addukten zwischen Isocyanaten (a) und den Verbindungen mit wasserstoffaktiven Gruppen (b) vorzugsweise Isocyanuratstrukturen entstehen.

Als Katalysatoren werden also insbesondere solche Stoffe verwendet, die Reaktionen der Isocyanate beschleunigen, insbesondere die Urethan-, Harnstoff- und Isocyanuratbildung.

Bevorzugt hierfür sind tertiäre Amine, Zinn- und Bismutumverbindungen, Alkali- und Erdalkalicarboxylate, quarternäre Ammoniumsalze, s-Hexahydrotriazine und Tris-(dialkylaminomethyl)-phenole.

In Betracht kommen beispielsweise organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Pentamethyl-diethylentriamin, Tetramethyl-diaminoethylether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bi-cyclo-(2,2,2)-octan, und Alkanolaminverbindungen, wie Triethanolamin,Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente (b).

f) Der Reaktionsmischung zur Herstellung der Hartschaumstoffe auf Isocyanatbasis können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Flammschutzmittel, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Flammschutzmittel können alle in der Polyurethanchemie für diesen Anwendungszweck üblichen Stoffe eingesetzt werden. Vorwiegend verwendet man Halogen- und Phosphorverbindungen, beispielsweise Ester der Orthophosphorsäure und der Methanphosphonsäure, z.B. Tris-(2-chlor-propyl)-phosphat oder Bis-(2-hydroxyethyl)aminomethylphosphonsäure-diethylester. Da der Hartschaumstoff auf Isocyanatbasis der Zukunft nur mit halogenfreien Zusatzstoffen gefertigt werden sollte, müssen auch die Flammschutzmittel halogenfrei sein. Hier kommen beispielsweise gegenüber Isocyanat reaktive Derivate der Phosphorsäure, der phosphorigen Säure oder der Phosphonsäure in Frage, gegebenenfalls in Kombination mit nichtreaktiven flüssigen und/oder festen halogenfreien Flammschutzmitteln, z.B. aus organischen Derivaten der Phosphorsäure, Phosphonsäure oder phosphorigen Säure bzw. Salzen der Phosphorsäure und anderen den Flammschutz unterstützenden Stoffen, wie Stärke, Cellulose, Aluminiumhydrat u.a. Der erfindungsgemäße Einsatz von Alkoholen mit halogenfreien Kohlenwasserstoffen als Treibmittel (f) verhindert die Anwendung unnötig hoher Mengen an Kohlenwasserstoff und liefert damit einen indirekten Beitrag zum Flammschutz. Im allgemeinen hat es sich als zweckmäßig erwiesen, 5 bis 50 Gew. - Teile, vorzugsweise 5 bis 25 Gew. -Teile, der genannten Flammschutzmittel für jeweils 100 Gew. -Teile der Komponente (b) zu verwenden.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u. a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Stärke, Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponente (a) bis (c), einverleibt, wobei jedoch der Gehalt an Matten, Vliesen und Geweben aus natürlichen und synthetischen Fasern Werte bis 80 erreichen kann.

Nähere Angaben über oben genannte und weitere Ausgangsstoffe sind der Fachliteratur, beispielsweise der Monographie von H. J. Saunders und K. C. Frisch "High Polymers" Band XVI, Polyurethanes Teil 1 und 2 , Verlag Interscience Publishers 1962 bzw. 1964 oder dem bereits erwähnten Kunststoffhandbuch, Polyurethane, Band VII, Carl Hanser Verlag, München, Wien, 1., 2. und 3. Auflage , 1966, 1983 und 1993 zu entnehmen.

Zur Herstellung der Hartschaumstoffe auf Isocyanatbasis werden die organischen und/oder modifizierten organischen Polyisocyanate (a) , höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,75:1, vorzugsweise 1,0 bis 1,3:1 und insbesondere 1,1 bis 1,2:1, beträgt. Falls die Hartschaumstoffe auf Isocyanatbasis zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 60:1, vorzugsweise 3 bis 8:1 angewandt.

Die Hartschaumstoffe auf Isocyanatbasis werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Als besonders vorteilhaft hat es sich erwiesen, nach dem Zweikomponenten-Verfahren zu arbeiten und die Aufbaukomponenten (b) , (d) , (e) und gegebenenfalls (c) und (f) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht. Die Vermischung kann, wie bereits dargelegt wurde,mechanisch mittels eines Rührers oder einer Rührschnecke durchgeführt werden. Die Formwerkzeugtemperatur beträgt zweckmäßigerweise 20 bis 110°C, vorzugsweise 30 bis 60°C und insbesondere 45 bis 50°C.

In geschlossenen Formen kann auch mehr schaumbildendes Reaktionsgemisch verwendet werden, als zur vollständigen Ausfüllung der Form erforderlich ist. Man erhält dann verdichtete Schaumstoffe. Eine ebenfalls einsetzbare Variante der Schaumstoffherstellung ist die sogenannte Doppeltransportbandtechnologie.

Die nach dem erfindungsgemäßen Verfahren hergestellten Polyurethan-Hartschaumstoffe oder Hartformschaumstoffe weisen eine Dichte von 0,02 bis 0,75 g/cm$^3$, vorzugsweise von 0,025 bis 0,24 g/cm$^3$ und insbesondere von 0,03 bis 0,1 g/cm$^3$ auf. Besonders eignen sie sich als Isolationsmaterial im Bau- und Kühlmöbelsektor, z.B. als Zwischenschicht für Sandwichelemente oder zum Ausschäumen von Kühlschrank- und Kühltruhengehäusen.

Die Erfindung soll an den nachfolgenden Ausführungsbeispielen näher erläutert werden. Die Beispiele 1 bis 19 zeigen dabei die verbesserte Treibwirkung und das verbesserte Fließverhalten bei Einsatz von erfindungsgemäßen Treibmittelgemischen aus niedrigsiedenden Alkoholen und Kohlenwasserstoffen gegenüber dem alleinigen Einsatz von niedrigsiedenden Kohlenwasserstoffen. Die weiteren Beispiele dienen der Darstellung der Auswirkungen auf andere wichtige Eigenschaften der Hartschaumstoffe auf Isocyanatbasis.

Beispiel 1 (Vergleich)

(MT = Masse-Teile)

Die Polyol-Komponente, bestehend aus

| | |
|---|---|
| 65,3 MT | eines Polyols auf Basis von Saccharose/Propylenoxid, OH-Zahl 440 mg KOH/g, |
| 13,5 MT | eines Polyols auf Aminbasis und Propylenoxid/Ethylenoxid, OH-Zahl 112 mg KOH/g, |
| 4,5 MT | eines Polyols auf Basis Propylenglykol/Propylenoxid, OH-Zahl 250 mg KOH/g, |
| 2,24 MT | Silikon-Stabilisator SR 321 (Firma OSi Specialties), |
| 2,58 MT | Dimethylcyclohexylamin, |
| 1,97 MT | Wasser und |
| 9,91 MT | Cyclopentan |

wurde mit 124 MT Roh-MDI, NCO-Gehalt 31,5 Masse-%, intensiv vermischt.
Die Konzentrationen der Treibmittel, bezogen auf die Gesamtmasse des aufschäumenden Gemisches, betrug:

| | |
|---|---|
| Wasser | 0,88 Masse% |
| Cyclopentan | 4,42 Masse%. |

Der entstandene Schaumstoff wies freigeschäumt im Schäumbecher eine Dichte (sogenannte "Becherrohdichte") von 31,8 kg/m$^3$ auf. Die Startzeit/Gelzeit/Steigzeit betrugen in s: 11/49/76.

Schlauchtest:

100 g reagierendes Gemisch wurden unmittelbar nach der Vermischung der Komponenten in einen Endlosschlauch aus einer Kunststoffolie mit einem Durchmesser von 4,5 cm gegeben. Der Schlauch wurde einseitig abgeklemmt und die erreichte Schäumlänge in cm als Maß für die Fließfähigkeit genommen. Es wurde ein Ergebnis von 138,8 cm gemessen.
(Die Resultate der Schlauchtests sind jeweils Mittelwerte aus 2 oder 3 Messungen.)

Beispiel 2 (erfindungsgemäß)

Es wurde ein Schaumstoff wie in Beispiel 1 hergestellt, wobei aber der Polyolkomponente zusätzlich 6 MT Methanol zugegeben wurden.
Die Konzentrationen der Treibmittel, bezogen auf die Gesamtmasse des aufschäumenden Gemisches, betrug:

| | |
|---|---|
| Wasser | 0,86 Masse% |
| Cyclopentan | 4,31 Masse% |
| Methanol | 2,61 Masse%. |

Der entstandene Schaum wies folgende Kennwerte auf:

| Dichte im Schäumbecher: | 30,2 kg/m$^3$. |
| --- | --- |
| Schlauchtest: | 150,3 cm |
| Startzeit/Gelzeit/Steigzeit in s: | 9/28/45. |

Trotz einer erheblich niedrigeren Gelzeit floß der Schaumstoff besser als im Vergleichsbeispiel 1.

Beispiel 3 (erfindungsgemäß)

Es wurde ein Schaumstoff wie in Beispiel 1 hergestellt, wobei aber der Polyolkomponente zusätzlich 6 MT Isopropanol zugegeben wurden.
Die Konzentrationen der Treibmittel, bezogen auf die Gesamtmasse des aufschäumenden Gemisches, betrug:

| Wasser | 0,86 Masse% |
| --- | --- |
| Cyclopentan | 4,31 Masse% |
| Isopropanol | 2,61 Masse%. |

Der entstandene Schaum wies folgende Kennwerte auf:

| Dichte im Schäumbecher: | 30,5 kg/m$^3$ |
| --- | --- |
| Schlauchtest: | 144,4 cm. |

Beispiel 4 (erfindungsgemäß)

Es wurde ein Schaumstoff wie in Beispiel 1 hergestellt, wobei aber der Polyolkomponente zusätzlich 6 MT Ethanol zugegeben wurden.
Die Konzentrationen der Treibmittel, bezogen auf die Gesamtmasse des aufschäumenden Gemisches, betrug:

| Wasser | 0,86 Masse% |
| --- | --- |
| Cyclopentan | 4,31 Masse% |
| Ethanol | 2,61 Masse%. |

Der entstandene Schaum wies folgende Kennwerte auf:

| Dichte im Schäumbecher: | 30,3 kg/m$^3$ |
| --- | --- |
| Schlauchtest: | 149,5 cm. |

Beispiel 5 (erfindungsgemäß)

Es wurde ein Schaumstoff wie in Beispiel 1 hergestellt, wobei aber der Polyolkomponente zusätzlich 6 MT n-Butanol zugegeben wurden.

Die Konzentrationen der Treibmittel, bezogen auf die Gesamtmasse des aufschäumenden Gemisches, betrug:

| | |
|---|---|
| Wasser | 0,86 Masse% |
| Cyclopentan | 4,31 Masse% |
| n-Butanol | 2,61 Masse%. |

Der entstandene Schaum wies folgende Kennwerte auf:

| | |
|---|---|
| Dichte im Schäumbecher: | 28,0 kg/m$^3$ |
| Schlauchtest: | 145,3 cm. |

Beispiel 6 (Vergleich)

Die Polyolkomponente nach Beispiel 1 wird in leicht abgewandelter Form mit n-Pentan und Wasser verschäumt. Die Polyol-Komponente, bestehend aus

63,4 MT     eines Polyols auf Basis von Saccharose/Propylenoxid, OH-Zahl 440 mg KOH/g,
13,11 MT    eines Polyols auf Aminbasis und Propylenoxid/Ethylenoxid, OH-Zahl 112 mg KOH/g,
4,37 MT     eines Polyols auf Basis Propylenglykol/Propylenoxid, OH-Zahl 250 mg KOH/g,
2,17 MT     Silikon-Stabilisator gemäß Beispiel 1,
2,51 MT     Dimethylcyclohexylamin,
1,91 MT     Wasser und
12,53 MT    n-Pentan

wurde mit 120,7 MT Roh-MDI, NCO-Gehalt 31,5 Masse-%, intensiv vermischt.

Die Konzentrationen der Treibmittel, bezogen auf die Gesamtmasse des aufschäumenden Gemisches, betrug:

| | |
|---|---|
| Wasser | 0,87 Masse% |
| n-Pentan | 5,69 Masse%. |

Der entstandene Schaumstoff wies freigeschäumt im Schäumbecher eine Dichte von 26,8 kg/m$^3$ auf. Der Schlauchtest ergab 181,1 cm.

Beispiel 7 (erfindungsgemäß)

Es wurde ein Schaumstoff wie in Beispiel 6 hergestellt, wobei aber der Polyolkomponente zusätzlich 6 MT Isopropanol zugegeben wurden.

Die Konzentrationen der Treibmittel, bezogen auf die Gesamtmasse des aufschäumenden Gemisches, betrug:

| Wasser | 0,84 Masse% |
|---|---|
| n-Pentan | 5,53 Masse% |
| Isopropanol | 2,65 Masse%. |

Der entstandene Schaum wies folgende Kennwerte auf:

| Dichte im Schäumbecher | 26,5 kg/m$^3$ |
|---|---|
| Schlauchtest | 190,2 cm. |

Trotz der bereits sehr starken Treibwirkung des n-Pentans (größere Menge, höherer Dampfdruck gegenüber Cyclopentan) liefert das Isopropanol einen zusätzlichen Treibeffekt und ein deutlich verstärktes Fließen.

Beispiel 8 (Vergleich)

Es wurde ein Schaumstoff wie in Beispiel 6 hergestellt, wobei aber der Polyolkomponente 12,53 MT Isopentan anstelle von 12,53 MT n-Pentan zugegeben wurden.
Die Konzentrationen der Treibmittel, bezogen auf die Gesamtmasse des aufschäumenden Gemisches, betrug:

| Wasser | 0,87 Masse% |
|---|---|
| Isopentan | 5,69 Masse%. |

Der entstandene Schaum wies folgende Kennwerte auf:

| Dichte im Schäumbecher | 27,0 kg/m$^3$ |
|---|---|
| Schlauchtest | 177,6 cm. |

Beispiel 9 (erfindungsgemäß)

Es wurde ein Schaumstoff wie in Beispiel 8 hergestellt, wobei aber der Polyolkomponente zusätzlich 6 MT Isopropanol zugegeben wurden.
Die Konzentrationen der Treibmittel, bezogen auf die Gesamtmasse des aufschäumenden Gemisches, betrug:

| Wasser | 0,84 Masse% |
|---|---|
| Isopentan | 5,53 Masse% |
| Isopropanol | 2,65 Masse%. |

Der entstandene Schaum wies folgende Kennwerte auf:

| Dichte im Schäumbecher | 24,8 kg/m$^3$ |
|---|---|
| Schlauchtest | 190,6 cm. |

**Beispiel 10 (Vergleich)**

Es wurde ein Schaumstoff wie in Beispiel 6 hergestellt, wobei aber der Polyolkomponente 9,62 MT Cyclopentan und 2,91 MT n-Pentan anstelle von 12,53 MT n-Pentan allein zugegeben wurden.

Die Konzentrationen der Treibmittel, bezogen auf die Gesamtmasse des aufschäumenden Gemisches, betrug:

| Wasser | 0,87 Masse% |
|---|---|
| Cyclopentan | 4,36 Masse% |
| n-Pentan | 1,32 Masse%. |

Der entstandene Schaum wies folgende Kennwerte auf:

| Dichte im Schäumbecher | 28,0 kg/m$^3$ |
|---|---|
| Schlauchtest | 176,2 cm. |

**Beispiel 11 (erfindungsgemäß)**

Es wurde ein Schaumstoff wie in Beispiel 10 hergestellt, wobei aber der Polyolkomponente zusätzlich 6 MT Isopropanol zugegeben wurden.

Die Konzentrationen der Treibmittel, bezogen auf die Gesamtmasse des aufschäumenden Gemisches, betrug:

| Wasser | 0,84 Masse% |
|---|---|
| Cyclopentan | 4,24 Masse% |
| n-Pentan | 1,28 Masse% |
| Isopropanol | 2,65 Masse%. |

Der entstandene Schaum wies folgende Kennwerte auf:

| Dichte im Schäumbecher | 26,7 kg/m$^3$ |
|---|---|
| Schlauchtest | 182,5 cm. |

**Beispiel 12 (Vergleich)**

Es wurde ein Schaumstoff wie in Beispiel 6 hergestellt, wobei aber der Polyolkomponente 9,62 MT Cyclopentan und 2,91 MT Cyclohexan anstelle von 12,53 MT n-Pentan zugegeben wurden.

Die Konzentrationen der Treibmittel, bezogen auf die Gesamtmasse des aufschäumenden Gemisches, betrug:

| Wasser | 0,87 Masse% |
| --- | --- |
| Cyclopentan | 4,36 Masse% |
| Cyclohexan | 1,32 Masse%. |

Der entstandene Schaum wies folgende Kennwerte auf:

| Dichte im Schäumbecher | 28,9 kg/m$^3$ |
| --- | --- |
| Schlauchtest | 166,6 cm. |

Beispiel 13 (erfindungsgemäß)

Es wurde ein Schaumstoff wie in Beispiel 12 hergestellt, wobei aber der Polyolkomponente zusätzlich 6 MT Isopropanol zugegeben wurden.

Die Konzentrationen der Treibmittel, bezogen auf die Gesamtmasse des aufschäumenden Gemisches, betrug:

| Wasser | 0,84 Masse% |
| --- | --- |
| Cyclopentan | 4,24 Masse% |
| Cyclohexan | 1,28 Masse% |
| Isopropanol | 2,65 Masse%. |

Der entstandene Schaum wies folgende Kennwerte auf:

| Dichte im Schäumbecher | 28,5 kg/m$^3$ |
| --- | --- |
| Schlauchtest | 177,1 cm. |

Beispiel 14 (Vergleich)

Es wurde ein Schaumstoff wie in Beispiel 6 hergestellt, wobei aber der Polyolkomponente 5,88 MT Cyclopentan und 5,88 MT Isopentan anstelle von 12,53 MT n-Pentan zugegeben wurden.

Die Konzentrationen der Treibmittel, bezogen auf die Gesamtmasse des aufschäumenden Gemisches, betrug:

| Wasser | 0,87 Masse% |
| --- | --- |
| Cyclopentan | 2,66 Masse% |
| Isopentan | 2,66 Masse%. |

Der entstandene Schaum wies folgende Kennwerte auf:

| Dichte im Schäumbecher | 28,2 kg/m$^3$ |
| Schlauchtest | 174,3 cm. |

**Beispiel 15 (erfindungsgemäß)**

Es wurde ein Schaumstoff wie in Beispiel 14 hergestellt, wobei aber der Polyolkomponente zusätzlich 6 MT Isopropanol zugegeben wurden.
Die Konzentrationen der Treibmittel, bezogen auf die Gesamtmasse des aufschäumenden Gemisches, betrug:

| Wasser | 0,85 Masse% |
| Cyclopentan | 2,59 Masse% |
| Isopentan | 2,59 Masse% |
| Isopropanol | 2,65 Masse%. |

Der entstandene Schaum wies folgende Kennwerte auf:

| Dichte im Schäumbecher | 26,7 kg/m$^3$ |
| Schlauchtest | 183,3 cm. |

**Beispiel 16 (Vergleich)**

Es wurde ein Schaumstoff wie in Beispiel 6 hergestellt, wobei aber der Polyolkomponente 8,82 MT Cyclopentan und 2,94 MT n-Heptan anstelle von 12,53 MT n-Pentan zugegeben wurden.
Die Konzentrationen der Treibmittel, bezogen auf die Gesamtmasse des aufschäumenden Gemisches, betrug:

| Wasser | 0,87 Masse% |
| Cyclopentan | 3,98 Masse% |
| n-Heptan | 1,33 Masse%. |

Der entstandene Schaum wies folgende Kennwerte auf:

| Dichte im Schäumbecher | 29,8 kg/m$^3$ |
| Schlauchtest | 155,3 cm. |

**Beispiel 17 (erfindungsgemäß)**

Es wurde ein Schaumstoff wie in Beispiel 16 hergestellt, wobei aber der Polyolkomponente zusätzlich 6 MT Isopropanol zugegeben wurden.

Die Konzentrationen der Treibmittel, bezogen auf die Gesamtmasse des aufschäumenden Gemisches, betrug:

| Wasser | 0,85 Masse% |
|---|---|
| Cyclopentan | 3,88 Masse% |
| n-Heptan | 1,29 Masse% |
| Isopropanol | 2,64 Masse%. |

Der entstandene Schaum wies folgende Kennwerte auf:

| Dichte im Schäumbecher | $28,3\ kg/m^3$ |
|---|---|
| Schlauchtest | 161,7 cm. |

Beispiel 18 (Vergleich)

Die Polyol-Komponente bestand aus

| 51,9 MT | eines Polyols auf Basis Sorbitol und Propylenoxid, OH-Zahl 490 mg KOH/g, |
|---|---|
| 18,5 MT | eines Polyols auf Aminbasis und Propylenoxid/Ethylenoxid, OH-Zahl 400 mg KOH/g, |
| 25,8 MT | Kartoffelstärke, |
| 1,27 MT | Silikon-Stabilisator gemäß Beispiel 1, |
| 1,12 MT | Dimethylcyclohexylamin und |
| 1,41 MT | Wasser. |

Zu 100 MT dieser Polyolkomponente wurden 8,75 MT Cyclopentan gegeben. Diese Mischung wurde anschließend mit 158,5 MT MDI-Rohprodukt, NCO-Gehalt 31,5 Masse%, intensiv verrührt.

Die Konzentrationen der Treibmittel, bezogen auf die Gesamtmasse des aufschäumenden Gemisches, betrug:

| Wasser | 0,51 Masse% |
|---|---|
| Cyclopentan | 3,11 Masse%. |

Der entstandene Schaumstoff wies folgende Kennwerte auf:

| Dichte im Schäumbecher: | $48,8\ kg/m^3$ |
|---|---|
| Startzeit/Gelzeit/Steigzeit in s: | 38/150/267 |
| Schlauchtest: | 81,5 cm. |

Beispiel 19 (erfindungsgemäß)

Es wurde ein Schaumstoff wie im Beispiel 18 hergestellt, wobei aber der Polyolkomponente zusätzlich 6 MT Isopropanol zugegeben wurden. Die Konzentrationen der Treibmittel, bezogen auf die Gesamtmasse des aufschäumenden Gemisches, betrug:

| Wasser | 0,49 Masse% |
|---|---|
| Cyclopentan | 3,04 Masse% |
| Isopropanol | 2,27 Masse%. |

Der entstandene Schaum wies folgende Kennwerte auf:

| Dichte im Schäumbecher: | 45,3 kg/m$^3$ |
|---|---|
| Startzeit/Gelzeit/Steigzeit in s: | 42/142/241 |
| Schlauchtest: | 91,9 cm. |

Trotz einer geringeren Gelzeit und kleineren Wasser-Cyclopentan-Mengen fließt der Schaumstoff besser als im Vergleichsbeispiel 18.

Beispiel 20 (Vergleich)

Die Polyol-Komponente, bestehend aus

| 5,41 MT | eines Adduktes aus Propylenglykol und Propylenoxid, OH-Zahl 250 mg KOH/g, |
|---|---|
| 54,05 MT | eines Gemisches aus stickstoffhaltigen Polyolen (Addukte von Ethylenoxid und Propylenoxid an Stickstoffverbindungen), OH-Zahl 440 mg KOH/g, |
| 24,32 MT | eines Polyols auf Basis von Saccharose und Propylenoxid, OH-Zahl 500 mg KOH/g, |
| 1,62 MT | Dimethylcyclohexylamin, |
| 2,7 MT | Silikonstabilisator gemäß Beispiel 1, |
| 1,98 MT | Wasser und |
| 9,92 MT | Cyclopentan |

wurde mit 132,4 MT Roh-MDI, NCO-Gehalt 31,5 Masse-% mit einem Rührwerk intensiv vermischt (Kennzahl: 112).
Die Konzentrationen der Treibmittel, bezogen auf die Gesamtmasse des aufschäumenden Gemisches betrug:

| Wasser | 0,85 Masse% |
|---|---|
| Cyclopentan | 4,30 Masse%. |

Der entstandene Schaum wies folgende Kennwerte auf:

| Dichte im Schäumbecher: | 32,0 kg/m$^3$ |
|---|---|
| Schlauchtest: | 141,8 cm |
| Startzeit/Gelzeit/Steigzeit in s: | 10/55/85. |

Physikalische Werte des Schaumstoffes nach Verschäumung in einer auf 45°C beheizten Stahlform 400mm x 300mm x 80mm (Überfüllungsgrad 1,11):

| Kerndichte in kg/m$^3$: | 32,2 |
|---|---|
| Druckfestigkeit in Schäumrichtung in N/mm$^2$: | 0,12 |
| Druck-E-Modul in Schäumrichtung in N/mm$^2$: | 3,55 |
| Wärmeleitfähigkeit (Hesto) in mW/mK: | 21,1( Sofortwert ) |
| Dimensionsstabilität bei -30°C, 24 h, in %: | 0,1/-0,1/0,0 |
| Dimensionsstabilität bei +80°C,24 h, in %: | 0,0/0,2/0,2 |

Beispiel 21 (erfindungsgemäß)

Zur Polyolkomponente gemäß Beispiel 20 wurden 4,24 MT Methanol gegeben.Die Isocyanatmenge wurde so verändert, daß die OH-Menge des Methanol in die konstant gehaltene Kennzahl von 112 eingerechnet wurde. Um im aufschäumenden Gemisch die gleiche prozentuale Menge Wasser und Cyclopentan zu haben, wurde die Zusammensetzung wie folgt verändert:

5,09 MT   Addukt aus Propylenglykol und Propylenoxid, OH-Zahl 250 mgKOH/g,
50,87 MT   Gemisch aus stickstoffhaltigen Polyolen (Addukte von Ethylenoxid und Propylenoxid an Stickstoffverbindungen), OH-Zahl 440 mgKOH/g,
22,89 MT   Polyol auf Basis von Saccharose und Propylenoxid, OH-Zahl 500 mgKOH/g,
1,52 MT   Dimethylcyclohexylamin,
2,54 MT   Silikonstabilisator gemäß Beispiel 1,
2,08 MT   Wasser,
10,77 MT   Cyclopentan,
4,24 MT   Methanol

Die Polyolkomponente wurde mit 147,8 MT Roh-MDI, NCO-Gehalt 31,5 Masse-%, mit einem Rührwerk intensiv vermischt (Kennzahl: 112, Methanol wurde mit eingerechnet).

Die Konzentrationen der Treibmittel, bezogen auf die Gesamtmasse des aufschäumenden Gemisches betrug:

| Wasser | 0,84 Masse% |
|---|---|
| Cyclopentan | 4,30 Masse% |
| Methanol | 1,71 Masse%. |

Der entstandene Schaum wies folgende Kennwerte auf:

| Dichte im Schäumbecher: | 29,2 kg/m$^3$ |
|---|---|
| Schlauchtest: | 157,7 cm |
| Startzeit/Gelzeit/Steigzeit in s: | 11/46/72. |

Physikalische Werte des Schaumstoffes nach Verschäumung in einer auf 45°C beheizten Stahlform 400mm x 300mm x 80mm (Überfüllungsgrad 1,3):

18

| | |
|---|---|
| Kerndichte in kg/m$^3$: | 33,8 |
| Druckfestigkeit in Schäumrichtung in N/mm$^2$: (berechnet für 32,2 kg/m$^3$: 0,17) | 0,18 |
| Druck-E-Modul in Schäumrichtung in N/mm$^2$: (berechnet für 32,2 kg/m$^3$: 4,81) | 5,20 |
| Wärmeleitfähigkeit (Hesto) in mW/mK: | 21,2 (Sofortwert) |
| Dimensionsstabilität bei -30°C, 24 h, in %: | 0,1/0,0/0,0 |
| Dimensionsstabilität bei +80°C, 24 h, in %: | 0,1/0,3/0,1. |

Die Druckfestigkeit und der E-Modul waren deutlich stärker erhöht, als es der Dichteerhöhung von 32,2 auf 33,8 kg/m$^3$ entsprach.

Das aufschäumende Gemisch floß besser als das Gemisch im Vergleichsbeispiel 20. Die Dichte im Becher war niedriger.

Trotz der niedrigeren Gel- und Steigzeit war das Fließvermögen neben der Erniedrigung der Becherdichte verbessert.

Die Druckfestigkeits- und -E-Modul-Werte für die Dichte 32,2 kg/m$^3$ wurden mit folgender dem Fachmann bekannten Beziehung aus den Werten der Dichte 33,8 kg/m umgerechnet:

$$(32,2/33,8)^{1,6} \text{ x gemessener Wert bei } 33,8 \text{kg/m}^3 = \text{berechneter Wert für Dichte } 32,2 \text{ kg/m}^3.$$

(Die entsprechende Gleichung ist beispielsweise in Polyurethanes World Congress 1993, Seite 234-240; S. B. Burns and E. L. Schmidt "The PIR/PUR Ratio: A NOvel Trimer Conversion Test with High Correlation to the Factory Mutual Calorimeter for HCFC-141b Blown Polyisocyanurate Foams" angegeben. Mit dieser Beziehung kann man kontrollieren, ob mechanische Eigenschaftsänderungen lediglich der Dichteänderung oder auch Änderungen der Eigenschaften der Hartschaumstoff-Gerüstsubstanz zuzuschreiben sind. In unserem Fall ist die Festigkeit der Gerüstsubstanz verbessert, da z. B. der für 32,2 kg/m$^3$ berechnete Wert der Druckfestigkeit mit 0,17 N/mm$^2$ für die erfindungsgemäße Variante deutlich höher als der bei der Vergleichsvariante mit 0,12 N/mm$^2$ (Beispiel 20) bei 32,2 kg/m$^3$ gemessene Wert ist.) Beispiel 22 (erfindungsgemäß)

Es wurde wie in Beispiel 21 verfahren, wobei aber 8,08 MT Ethanol anstelle von 4,24 MT Methanol zugegeben wurden. Die Cyclopentan- und Wasserkonzentrationen wurden ebenso wie die Kennzahl (112, Ethanol mit eingerechnet) wiederum konstant gehalten.

Die Konzentrationen der Treibmittel, bezogen auf die Gesamtmasse des aufschäumenden Gemisches betrug:

| | |
|---|---|
| Wasser | 0,84 Masse% |
| Cyclopentan | 4,3 Masse% |
| Ethanol | 3,23 Masse%. |

Der entstandene Schaum wies folgende Kennwerte auf:

| | |
|---|---|
| Dichte im Schäumbecher: | 28,5 kg/m$^3$ |
| Schlauchtest: | 176,3 cm |
| Startzeit/Gelzeit/Steigzeit in s: | 12/53/82. |

Physikalische Werte des Schaumstoffes nach Verschäumung in einer auf 45°C beheizten Stahlform 400mm x 300mm x 80mm (Überfüllungsgrad 1,3):

| | |
|---|---|
| Kerndichte in kg/m$^3$: | 32,9 |
| Druckfestigkeit in Schäumrichtung in N/mm$^2$: (berechnet für 32,2 kg/m$^3$: 0,17) | 0,18 |
| Druck-E-Modul in Schäumrichtung in N/mm$^2$: (berechnet für 32,2 kg/m$^3$: 4,92) | 5,09 |
| Wärmeleitfähigkeit (Hesto) in mW/mK: | 21,4 (Sofortwert) |
| Dimensionsstabilität bei 30°C, 24 h, in %: | 0,0/0,0/0,0 |
| Dimensionsstabilität bei +80°C, 24 h, in %: | -0,1/0,2/0,1. |

Druckfestigkeit und -E-Modul waren deutlich gegenüber dem Vergleichsbeispiel 20 erhöht. Trotz niedrigerer Gel- und Steigzeiten floß das Schaumgemisch besser als im Vergleichsbeispiel.

Beispiel 23 (erfindungsgemäß)

Es wurde wie in Beispiel 20 verfahren, wobei jedoch zusätzlich 4,8 MT Isopropanol zugegeben wurden. Die Kennzahl (112, Isopropanol mit eingerechnet) wurde erneut konstant gehalten.

Die Konzentrationen der Treibmittel, bezogen auf die Gesamtmasse des aufschäumenden Gemisches betrug:

| | |
|---|---|
| Wasser | 0,85 Masse% |
| Cyclopentan | 4,30 Masse% |
| Isopropanol | 1,98 Masse%. |

Der entstandene Schaum wies folgende Kennwerte auf:

| | |
|---|---|
| Dichte im Schäumbecher: | 30,2 kg/m$^3$ |
| Schlauchtest: | 161,8 cm |
| Startzeit/Gelzeit/Steigzeit in s: | 11/52/84. |

Da durch die Zugabe des Isopropanols die Gel- und Steigzeiten etwas größer als im Beispiel 20 wurden, erfolgte eine Korrektur mit zusätzlich 0,4 MT Katalysatorgemisch.

Mißt man mit einem genormten Bolzen von 20mm Durchmesser die Eindringkraft in den frischen Schaum im Zeitbereich unmittelbar nach der Steigzeit ab 3 Minuten als Maß für die Nachhärtung, erhält man folgende Werte im Vergleich mit dem Schaumstoff nach Vergleichsbeispiel 20:

| | Zeit (Minuten) | | | | |
|---|---|---|---|---|---|
| | 3 | 4 | 5 | 6 | 8 |
| Schaumstoff, Beispiel 23, Eindringkraft in N: | 40,1 | 66,0 | 81,5 | 91,0 | 96,0 |
| Schaumstoff, Beispiel 20, Eindringkraft in N: | 41,0 | 69,0 | 90,0 | 97,0 | 104,5 |

Obwohl eine vergleichbare Gelzeit vorlag, floß das erfindungsgemäße Schaumgemisch besser, lieferte eine niedrigere Dichte und der Nachhärtungsverlauf war unter Berücksichtigung der niedrigeren Dichte im Vergleich mit dem Schaumstoff nach Beispiel 20 nicht verschlechtert.

Der Einfluß der Dichte wurde analog zur Beschreibung der Dichteabhängigkeit von mechanischen Daten in Beispiel 21 abgeschätzt, d.h. die Werte der Eindringkraft von Beispiel 23 wurden mit dem Faktor

$$(\text{Becherrohdichte Beispiel 20/Becherrohdichte Beispiel 23})^{1,6} = (32,2/30,2)^{1,6} = 1,108$$

korrigiert:

| | Zeit (Minuten) | | | | |
|---|---|---|---|---|---|
| | 3 | 4 | 5 | 6 | 8 |
| Beispiel 23, Eindringkraft in N, korrigiert auf 32 kg/m$^3$ | 44,4 | 73,1 | 90,3 | 100,8 | 106,4 |

Diese Korrektur zeigt, daß der Nachhärtungsverlauf der Zellgerüstsubstanz nicht verschlechtert, eher ein wenig verbessert ist.

**Patentansprüche**

1. Verfahren zur Herstellung von Hartschaumstoffen auf Isocyanatbasis durch Umsetzung von

   a) organischen und/oder modifizierten organischen Polyisocyanaten mit

   b) mindestens einer höhermolekularen Verbindung mit mindestens zwei reaktiven Wasserstoffatomen und gegebenenfalls

   c) niedermolekularen Kettenverlängerungs- und/oder Vernetzungsmitteln

   in Gegenwart von

   d) Treibmitteln,
   e) Katalysatoren sowie gegebenenfalls
   f) weiteren Hilfsmitteln und/oder Zusatzstoffen,

   dadurch gekennzeichnet, daß als Treibmittel ein Gemisch aus mindestens einem niedrigsiedenden Kohlenwasserstoff mit 3 bis 7 Kohlenstoffatomen und niedermolekularen monofunktionellen, primäre oder sekundäre Hydroxylgruppen enthaltenden Alkoholen mit 1 bis 4 Kohlenstoffatomen eingesetzt wird.

2. Verfahren nach Anspruch 1, dadurch gekennzeichnet, daß das Treibmittelgemisch in Verbindung mit dem aus Wasser und Isocyanat entstehenden Kohlendioxid eingesetzt wird.

3. Verfahren nach Anspruch 1 oder 2, dadurch gekennzeichnet, daß die niedrigsiedenden Kohlenwasserstoffe mit 3 bis 7 Kohlenstoffatomen in einer Menge von 0,1 bis 12 Masse-%, bezogen auf die Gesamtmenge des Schaumstoffes, eingesetzt werden.

4. Verfahren nach einem der Ansprüche 1 bis 3, dadurch gekennzeichnet, daß die niedermolekularen monofunktionellen, primäre oder sekundäre Hydroxylgruppen enthaltenden Alkohole mit 1 bis 4 Kohlenstoffatomen in einer Menge von 0,1 bis 6 Masse-%, bezogen auf die Gesamtmenge des Schaumstoffes, eingesetzt werden.

5. Verfahren nach einem der Ansprüche 1 bis 4, dadurch gekennzeichnet, daß als niedrigsiedender Kohlenwasserstoff mit 3 bis 7 Kohlenstoffatomen Cyclopentan verwendet wird.

6. Verfahren nach einem der Ansprüche 1 bis 4, dadurch gekennzeichnet, daß als niedrigsiedender Kohlenwasserstoff mit 3 bis 7 Kohlenstoffatomen n-Pentan verwendet wird.

7. Verfahren nach einem der Ansprüche 1 bis 4, dadurch gekennzeichnet, daß als niedrigsiedender Kohlenwasserstoff mit 3 bis 7 Kohlenstoffatomen Isopentan verwendet wird.

8. Verfahren nach einem der Ansprüche 1 bis 7, dadurch gekennzeichnet, daß als niedermolekularer monofunktionel-ler, primäre oder sekundäre Hydroxylgruppen enthaltender Alkohol mit 1 bis 4 Kohlenstoffatomen Methanol verwendet wird.

9. Verfahren nach einem der Ansprüche 1 bis 7, dadurch gekennzeichnet, daß als niedermolekularer monofunktioneller, primäre oder sekundäre Hydroxylgruppen enthaltender Alkohol mit 1 bis 4 Kohlenstoffatomen Ethanol verwendet wird.

10. Verfahren nach einem der Ansprüche 1 bis 7, dadurch gekennzeichnet, daß als niedermolekularer monofunktioneller, primäre oder sekundäre Hydroxylgruppen enthaltender Alkohol mit 1 bis 4 Kohlenstoffatomen n-Propanol verwendet wird.

11. Verfahren nach einem der Ansprüche 1 bis 7, dadurch gekennzeichnet, daß als niedermolekularer monofunktioneller, primäre oder sekundäre Hydroxylgruppen enthaltender Alkohol mit 1 bis 4 Kohlenstoffatomen iso-Propanol verwendet wird.

12. Verfahren nach einem der Ansprüche 1 bis 7, dadurch gekennzeichnet, daß als niedermolekulare monofunktionelle, primäre oder sekundäre Hydroxylgruppen enthaltende Alkohole mit 1 bis 4 Kohlenstoffatomen die entsprechenden Isomeren des Butanols verwendet werden.

13. Treibmittelmischung für die Herstellung von Hartschaumstoffen auf Isocyanatbasis nach Anspruch 1, bestehend aus einem Gemisch aus mindestens einem niedrigsiedenden Kohlenwasserstoff mit 3 bis 7 Kohlenstoffatomen und niedermolekularen monofunktionellen, primäre oder sekundäre Hydroxylgruppen enthaltenden Alkoholen mit 1 bis 4 Kohlenstoffatomen.

14. Verwendung der gemäß Anspruch 1 hergestellten Hartschaumstoffe auf Isocyanatbasis als Isoliermaterial.